# EUROPÄISCHE PATENTSCHRIFT

(11) **EP 1 446 353 B1**
(45) Veröffentlichungstag und Bekanntmachung des Hinweises auf die Patenterteilung: **07.05.2008**
(21) Anmeldenummer: 02785371.2
(22) Anmeldetag: 07.11.2002
(51) Int. Cl.: B66F 9/14, B65G 1/04, B66F 9/07

(54) **LASTAUFNAHMEMITTEL ZUR VERWENDUNG IN EINEM SYSTEM ZUM BEDIENEN VON LAGEREINHEITEN**
LOAD SUSPENSION MEANS FOR USE IN A SYSTEM FOR HANDLING STORAGE UNITS
MOYEN DE SUSPENSION DE CHARGE POUR UTILISATION DANS UN SYSTEME DESTINE A MANIPULER DES UNITES DE STOCKAGE

(30) Priorität: 08.11.2001 DE 10154787
(43) Veröffentlichungstag der Anmeldung: 18.08.2004
(73) Patentinhaber: KRUSCHE LAGERTECHNIK AG, 85435 Erding (DE)
(72) Erfinder: LUKAS, Gunther, 92711 Parkstein (DE); KRUSCHE, Arnold, 35584 Wetzlar (DE); HAFENEDER, Anton, 84079 Bruckberg (DE)
(74) Vertreter: Jehle, Volker Armin
(86) Internationale Anmeldenummer: PCT/EP2002/012453
(87) Internationale Veröffentlichungsnummer: WO 2003/040021

(56) Entgegenhaltungen:
- WO-A-97/47554
- CH-A- 678 310
- DE-A- 1 756 427
- DE-A- 2 316 630
- DE-A- 3 613 079
- DE-A- 4 210 175
- US-A- 3 596 789
- US-A- 5 207 555

## Beschreibung

Gegenstand der vorliegenden Erfindung ist ein Lastaufnahmemittel zur verwendung in einem System zum Bedienen von Lagereinheiten, insbesondere von Hochregallagern unter Zuhilfenahme eines Regalbediengerätes, welches stets über eine entsprechende Bodenfreiheit unterhalb eines Lastaufnahmemittels verfügt gemäß dem Oberbegriff des Anspruchs 1.

Zur Realisierung von Rationalisierungseffekten in der Lagerlogistik ist man bestrebt, einzelne Lagereinheiten räumlich zusammenzufassen und damit Lagerkapazitäten zu vergrößern. Um dennoch günstige Zugriffszeiten, d.h. Einlager- und Auslagerzeiten erzielen zu können, ist es notwendig, neben der Ausgestaltung entsprechender Regaleinheiten Systeme und Konzepte zu schaffen, die es erlauben, Güter unterschiedlicher Abmessungen, unterschiedlichen Gewichts und Schwerpunktsverteilung ziel- und zeitorientiert ein- und auszulagern und zur Absicherung gegen einen etwaigen Ausfall dieser Regalbediengeräte entsprechende Redundanzkapazitäten vorzusehen.

Aufgabe der vorliegenden Erfindung ist es daher, ein Lastaufnahmemittel zur Verwendung in einem System zum Bedienen von Lagereinhei-<SHY>zum Bedienen von Lagereinheiten bereitzustellen, welches einerseits schnelle Ein- und Auslagerungszeiten leisten kann, sowie ferner eine optimale Redundanzkapazität aufweist, um einen Ausfall einzelner Regalbediengeräte bestmöglich zu begegnen.

Die vorliegende Erfindung erreicht dieses und weitere Ziele durch den Gegenstand des Anspruchs 1.

DE 25 53 221 beschreibt eine Lagereinrichtung mit übereinander angeordneten, von Pfeilern getragenen Regalauflagern, einem Hubwerk, von dem mehrere Hubseile zu einem mit Lastübergabevorrichtungen versehenen Hubrahmen führen, wobei an dem Hubrahmen Stützarme angeordnet sind, die in an den Regalen vorhandene Aufnahmeöffnungen einschiebbar sind. Zum Befestigen der Stützarme an den Regalen sind am Ende der Stützarme bspw. Klemmbacken oder nach unten gerichtete Haken zum Hinterfassen von aus den Pfeilern herausragenden Bolzen vorgesehen.

Für ein besseres Verständnis des erfindungsgemäßen Lastaufnahmemittels ist im Folgenden ein beispielhaftes System beschrieben, in welchem das erfindungsgemäße Lastaufnahmemittel verwendet werden kann. Das erfindungsgemäße Lastaufnahmemittel selbst wird darauf folgend beschrieben.

Das System zum Bedienen von Lagereinheiten besteht im wesentlichen aus einzelnen Regalbediengeräten jeweils mit zwei dynamischen Baueinheiten, der Verfahreinrichtung und dem Lastaufnahmemittel sowie einer statischen Baueinheit, dem Regallager bestehend aus einzelnen Regallagereinheiten, beliebiger Länge und Ausdehnung.

Die beide dynamischen Baueinheiten sind über forminstabile Verbindungselemente, beispielsweise Stahlseile, Ketten oder ähnlichem miteinander verbunden.

Als statisch fixierte Baueinheit des Systems sind mehrere Regaleinheiten, vorzugsweise Hochregallagereinheiten vorgesehen, die durch äquidistante Gassen voneinander getrennt sind und in nahezu beliebig großen Räumen angeordnet werden können.

### Funktionsprinzip des Systems

Mit dem System können beliebige Güter effizient in einem Lager ein- und ausgelagert werden, und aufgrund der Möglichkeit, mehrere Regalbediengeräte in einer Regalgasse anzuordnen und diese auch gleichzeitig zu bedienen, wird eine kurze Zugriffszeit und somit eine hohe Wirtschaftlichkeit erreicht

Nach dem Aufbau der Hochregaleinheiten, wobei sowohl die Anzahl der übereinander befindlichen Lagereinheiten als auch die Länge der Lagereinheiten sowie die Anzahl der jeweiligen Gassen wählbar ist, werden die Regalbediengeräte in den entsprechenden Gassen angeordnet

Aufgrund der bestehenden Bodenfreiheit unterhalb einer jeden Verfahreinrichtung und Lastaufnahmemittel ist es möglich, in jede einzelne Ebene des Hochregallagerkomplexes eine Verfahreinrichtung mit daran angeordneter Lastaufnahmemitteln vorzusehen.

Bei einem Hochregallager, welches beispielsweise 5 Regaleinheiten aufweist und 6 Regalebenen umfaßt ist es beispielsweise möglich, in die 4 äquidistant ausgebildeten Regalgassen jeweils maximal 6 Regalbediengeräte anzuordnen und im Bedarfsfall alle 6 Regalbediengeräte, entsprechend einem Steuerungsprogramm zu betreiben, so daß in der Summe 24 Regalbediengeräte bereit stehen.

Das Einlagern von beliebig ausgebildeten Lasten, d.h. Lasten unterschiedlicher Größe, unterschiedlichem Gewicht und unterschiedlicher Abmessung läuft nach folgendem Verfahrensschema ab:
1. Aufnehmen der Last mittels einer in dem Lastaufnahmemittel integrierten Hubvorrichtung, wobei an der Hubvorrichtung eine Verschiebeeinrichtung angeordnet ist, die eine Transversalbewegung der Last erlaubt;
2. "Zentrieren" der Last auf dem Lastaufnahmemittel;
3. gleichzeitig/nachfolgend zu "2. - Berechnen eines Verfahrweges ausgehend von den gegenwärtigen Position zum Zielort;
4. Bewegungsaufnahme der Verfahreinrichtung in Richtung Zielort;
5. Steuerungsablauf der Bewegung der Verfahreinrichtung und des Lastaufnahmemittels;
6. Ankunft am Zielort (bspw. Zielregaleinheit), wobei sowohl die Verfahreinrichtung als auch das Lastaufnahmemittel den Bewegungsablauf vollständig abgeschlossen hat;
7. Verriegeln des Lastaufnahmemittels auf der Ebene der Ziekegaleinheit unter Herstellung einer Formschluß- oder KraftschluBverbindung mit den benachbarten Regaleinheiten;
8. Anheben der Last mittels Hubvorrichtung;
9. Transversalbewegung der Last mittels integrierter Verschiebeeinrichtung;
10. Plazieren der Last in der entsprechenden Zielregaleinheit;
11. Absenken der Hubvorrichtung und Reversion der Transversalbewegung;
12. Lösen der Verankerung in der Regaleinheit;
13. Optionales Bereitschaftssignal für nächsten Ein-/Auslagerungsauftrag.

Alle in einer Gasse befindlichen Lagerbediengeräte werden über eine entsprechende Steuerung koordiniert, d.h. ein Steuerungssystem kennt aufgrund entsprechender Sensoreinheiten zu jedem Zeitpunkt den jeweiligen Bewegungszustand und Ort einer jeden Regalbediengerät in einer Gasse und ist somit in der Lage, eine Kollision von gleichzeitig bewegenden Regalbediengeräten zu vermeiden. Hierzu weist jedes Regalbediengerät eine Steuerungselektronik auf, die über entsprechende Sensoren bzw. Meßeinrichtungen den Bewegungs- oder Ruhezustand bestimmt und diesen einer zentralen Steuereinheit übermittelt.

Zur Bestimmung des jeweiligen Bewegungszustands weist ein Regalbediengerät eine Steuereinheit auf, die vorzugsweise in der Verfahreinrichtung angeordnet ist und sowohl den Antrieb der Verfahreinrichtung als auch den Antrieb der Seilspulen steuert bzw. regelt. Ferner weist die Verfahreinrichtung Mittel auf, um sowohl die relative Position der an den Seilen hängenden Lastaufnahmemitteln gegenüber der Verfahreinrichtung festzustellen, wobei insbesondere die dynamische Positionsänderung des Lastaufnahmemittels aufgrund der Bewegung der Verfahreinrichtung festgestellt wird.

Die relative Position des Lastaufnahmemittels ist beispielsweise über eine Distanzmessung zwischen Verfahreinrichtung und Lastaufnahmemittel oder über entsprechende Winkelmessungen der beiden Einheiten zueinander möglich, wobei die Messungen optischer, mechanischer oder elektrischer Art sein können.

Da die Meßergebnisse hinsichtlich der relativen Position des Lastaufnahmemittels gegenüber der Verfahreinrichtung in entsprechende Rechenalgorithmen implementiert werden, um ungewünschte Pendelsituationen des Lastaufnahmemittels zu vermeiden, ist eine entsprechend hohe Präzision und rasche Meßwertermittlung notwendig. Eine bevorzugte Meßwertermittlung wird beispielsweise mit Hilfe des Winkelmeßverfahrens und entsprechender Winkel meßvorrichtungen erzielt, die in der DE 10122 142.8 beschrieben sind.

Aufgrund der vorzugsweise in der Verfahreinrichtung integrierten Steuerung ist es möglich, jedes Regalbediengerät so zwischen dem Start- und Zielort zu bewegen, daß im wesentlichen keine Pendelschwingungen des Lastaufnahmemittels aufkommen, sondern lediglich eine einzige Amplitudenschwingung entsteht, d.h. das Lastaufnahmemittel setzt sich aufgrund der Trägheit später als die Verfahreinrichtung in Bewegung und eilt somit der Verfahreinrichtung nach; beim Abbremsen der Verfahreinrichtung wird die Verzögerung so gesteuert, daß das Lastaufnahmemittel im Zielort im wesentlichen gleichzeitig mit der Verfahreinrichtung zum Stoppen gelangt.

Aufgrund der Tatsache, daß das Steuerungssystem ständig die präzise Position der Verfahreinrichtung und der daran hängenden Lastaufnahmemittel kennt, können alle Bewegungen innerhalb einer Gasse zuverlässig aufeinander abgestimmt werden, so daß eine Kollision einzelner Verfahreinrichtungen mit Lastaufnahmemitteln vermieden werden kann.

Durch die Anordnung von mehreren Verfahreinrichtungen in einer Regalgasse ist es möglich, ausgefallene Regalbediengerät zumindest teilweise in ihrer Funktion zu ersetzen, so daß die Zugriffsmöglichkeit auf die eingelagerten Lasten und Güter stets gewährleistet werden kann.

Lediglich bei Ausfall des obersten Regalbediengeräts kann auf die in der obersten Ebene der Regalgasse eingelagerten Güter nicht mehr zugegriffen werden, bei Ausfall eines darunter befindlichen Regalbediengeräts ist es jedoch stets möglich, die Aufgaben von einem darüber befindlichen Regalbediengerät zu erfüllen, so daß auch ein Totalausfall von mehreren Regalbediengeräten keine wesentliche Einschränkung in der Verfügbarkeit der eingelagerten Güter zur Folge hat, soweit nicht die oberste Regalbediengerät betroffen ist

### Erste Baueinheit

### Verfahreinrichtung

Das Lastaufnahmemittel hängt an forminstabilen Verbindungselementen, beispielsweise Stahlseilen, Ketten oder ähnlichem an einer Verfahreinrichtung. Jede einzelne Verfahreinrichtung ist schienengebunden auf einem bestimmten Niveau des Lagersystems, welches es nie verläßt

Lediglich zum Ein- bzw. Auslagern der Lasten oder zum Transport in entfernte Lagereinheiten können entsprechende Schienen auch außerhalb der Regallagereinheiten verlegt werden. In der Verfahreinrichtung sind folgende Baugruppen integriert:
- Steuerungseinheit;
- Antriebseinheit für die Verfahreinrichtung;
- Antriebseinheit für die Seilspulen;
- Führungseinheit zur Schienenführung

In jeder Verfahreinrichtung ist eine Steuereinheit integriert und alle Steuereinheiten der in einer Gasse befindlichen Verfahreinrichtungen sind über entsprechende Kommunikationsschnittstellen miteinander verbunden. Beispielsweise kann die Kommunikation der einzelnen Steuereinheiten drahtlos über ein Funksignal oder auf optischem Wege erfolgen. Die Koordination und Abstimmung der Bewegungsabläufe der jeweiligen Regalbediengeräte wird vorteilhafterweise von einer zentralen Steuereinheit vorgenommen, wobei diese zentrale Steuereinheit sowohl ortsfest an einer Regaleinheit als auch mobil an einer ausgewählten Verfahreinrichtung angeordnet sein kann.

Neben entsprechenden Einrichtungen zur Aufnahme entsprechender Bewegungsdaten umfaßt jede Steuereinheit zumindest einen Prozessor mit einem darin hinterlegten Rechenprogramm mit Hilfe dessen, aufgrund der ermittelten Positionsdaten der Verfahreinrichtung und des Lastaufnahmemittels der Bewegungsablauf dieser beiden Einheiten zum Zielort gesteuert wird.

### Steuereinheit

Um unerwünschte Pendelbewegungen des Lastaufnahmemittels während der Bewegung zu verhindern, können unterschiedliche Verfahren vorgenommen werden. Im Rahmen einer Regelschleife ist es beispielsweise möglich, Ist-Werte mit entsprechenden Soll-Werten eines nach den Kriterien der optimalen Steuerung berechneten Bewegungsablaufs des Lastaufnahmemittels zu vergleichen und eine stetige Regelung vorzunehmen.

Bei einem anderen Verfahren ist es möglich, ausgehend von einer Ist-Position des Lastaufnahmemittels, stets einen neuen Verfahrweg zu berechnen und dem entsprechend die Seillängen an den Seilspulen sowie die Verzögerung oder Beschleunigung der Verfahreinrichtung zu bestimmen.

Zur Vermeidung von Pendelbewegungen kann das System zumindest zwei Einstellgrößen beeinflussen: Beschleunigung bzw. Verzögerung der Verfahreinrichtung und die Seillängenänderung im vorderen bzw. hinteren Bereich des Lastaufnahmemittels.

Die in der Steuereinheit hinterlegten Programmalgorithmen verändern je nach Bedarf (d.h. bspw. unter Berücksichtigung des gegenwärtigen Zustands des Systems, insbesondere Position und Geschwindigkeit des Lastaufnahmemittels, Lage des Zielorts, der Position und Geschwindigkeit der anderen Verfahreinrichtungen in der Gasse, der gegenwärtigen Seillängen und der Seillängen am Zielort) die Parameter Geschwindigkeit und Beschleunigung der Verfahreinrichtung und die Seillängen, ggf. jeweils im vorderen und hinteren Bereich des Lastaufnahmemittels.

### Wegmeßvorrichtung für Verfahreinrichtung

Zur Bestimmung der jeweiligen Position der Verfahreinrichtung sind auf der Verfahreinrichtung bzw. in der Regaleinheit, die zum Transport der Verfahreinrichtung dienen, entsprechende Wegmeßsysteme vorgesehen, die es erlauben, die präzise Position einer jeden Verfahreinrichtung in einer Gasse zu bestimmen. Diese Wegmeßsysteme können beispielsweise auf entsprechenden Induktionsmeßgebern beruhen oder mit Hilfe von Laserstrahlen, die von einer Referenzplatte zurückgeworfen werden Daten ermitteln, die zur weiteren Verarbeitung an die Steuereinheit übermittelt werden. Aus den so gewonnenen Daten der Positionsbestimmung bzw. - änderung läßt sich mittels entsprechender Datenverarbeitungsprogramme die Geschwindigkeit und Beschleunigung/Verzögerung, sowie deren Änderung berechnen, so daß der relative Bewegungszustand der Verfahreinrichtung zur Regaleinheit stets bekannt ist Ebenso sind andere Wegmeßsysteme, die auf optischer Funktionsweise basieren möglich.

### Antriebseinheit der Verfahreinrichtung

Um einen zuverlässigen Antrieb der Verfahreinrichtungen zu gewährleisten sind diese zweckmäßigerweise mit Rädern ausgestattet, so daß eine entsprechende Kraft/Momentenübertragung auf eine Schiene erfolgen kann.

Zweckmäßigerweise sind an der Verfahreinrichtung mindestens zwei Räderpaare (d.h. in einem vorderen Bereich und einem hinteren Bereich) vorgesehen, wobei beide Räderpaare vorteilhafterweise antreibbar ausgebildet sind, um auch bei schwereren Lasten eine zuverlässige Antriebsleistung realisieren zu können.

Vorteilhafterweise ist die Schiene mit einer im wesentlichen planen Oberfläche versehen auf der die Antriebsräder abwälzen können. Es ist jedoch auch möglich die Schienen als Zahnstangen auszubilden, so daß entsprechende Zahnräder zum Antrieb Verwendung finden.

Weiterhin ist es möglich, den Antrieb der Verfahreinrichtung über entsprechende Transportbänder vorzunehmen. Wird beispielsweise das Antriebsaggregat in einer Regaleinheit integriert und die Verfahreinrichtung über entsprechende Treibriemen oder Bänder angetrieben, so kann das zu beschleunigende bzw. zu verzögernde Lastgewicht um die Masse des Antriebsaggregats reduziert werden.

Die Verfahreinrichtung wird über mindestens einen Elektromotor angetrieben, der über entsprechende Getriebestangen das Antriebsmoment auf mindestens zwei Antriebsräder überträgt und so die Verfahreinrichtung beschleunigt bzw. abbremst Vorteilhafterweise wird zumindest eine Seite der Verfahreinrichtung über eine entsprechende Schienenführung geführt, so daß Spurtreue innerhalb einer gewissen Toleranz über die gesamte Länge der Schiene gewährleistet ist.

### Seilspulen auf den Verfahreinrichtungen

Zum Heben und Senken des Lastaufnahmemittels sind zweckmäßigerweise vier Spulen vorgesehen, auf denen das forminstabile Verbindungselement aufgespult wird. Um stets eine entsprechend der Steuerung gewünschte Ausrichtung des Lastaufnahmemittels zu gewährleisten, werden zumindest zwei Seilspulen synchron angetrieben, zweckmäßigerweise sind die beiden hinteren und vorderen Seilspulen jeweils synchronisiert. Es ist jedoch auch möglich, lediglich zwei Spulen auf der Verfahreinrichtung anzuordnen, um bspw. das Gewicht zu reduzieren oder Mittel zum Synchronisieren der Seilspulen zu vermeiden.

### Auflaufbremse

Das Lastaufnahmemittel ist an vier forminstabilen Verbindungselementen, vorzugsweise Stahlseilen an der Verfahreinrichtung.befestigt und die jeweilige Ausfahrlänge sowohl über in den jeweiligen Seilspulen integrierten Seillängengebern als auch über entsprechende Winkelmeßvorrichtung zu ermitteln. Um jedoch eine Beschädigung der einzelnen mechanischen Elemente im Lastaufnahmemittel durch eine ungewollte Kollision des Lastaufnahmemittels mit der Verfahreinrichtung zu verhindern ist sowohl am Lastaufnahmemittel als auch an der Verfahreinrichtung eine entsprechende Vorrichtung angebracht, die ein zuverlässiges Abbremsen und Stoppen der Seilspulen bewirkt

Diese Auflaufbremse besteht aus zwei Bauelementen, einem ersten Bauelement, welches an der Verfahreinrichtung angeordnet ist und einem zweiten Bauelement, welches auf dem Lastaufnahmemittel vorgesehen ist

Das erste Bauelement besteht vorteilhafterweise aus einer kegelstumpfförmigen Ausnehmung und einer darüber zentriert angeordneten Schaltervorrichtung, die unmittelbar mit der Stromzufuhr der elektrisch angetriebenen Seilspulen verbunden ist Die zweite Baueinheit weist einen kegelstumpfförmigen Körper aus, der federgelagert auf einem Bolzen angeordnet ist und nach Einfügen in die kegelstumpfförmige Aussparung an dieser im wesentlichen formschlüssig aufliegt

Bei einer anderen bevorzugten Ausführungsform der Auflaufbremse ist an der Verfahreinrichtung eine hülsenförmige Vorrichtung mit darin befindlichen elektrischen Schalterelementen vorgesehen und als Gegenstück auf dem Lastaufnahmemittel eine dornartige Vorrichtung angeordnet, die bei Eindringen in die hülsenartige Vorrichtung nach und nach die entsprechenden elektrischen SchaIterelemente betätigt und so schließlich, bei Erreichen eines bestimmten Schalters den Antrieb der Seilspulen vollends stoppt

Zweckmäßigerweise können diese Schalter als Magnetschalter ausgebildet sein, die umfänglich um die hülsenartige Vorrichtung angeordnet sind und so bei Eindringen der dornartigen Vorrichtung nach und nach entsprechende Kontakte auslösen. Eine nachgeschaltete Programmeinrichtung wertet diese Kontaktsignale aus und bremst sukzessive die Antriebe der Seilspulen ab, so daß bei einem vollständigen Eindringen der dornartigen Vorrichtung in die hülsenartige Vorrichtung diese zum Stillstand gekommen sind Zweckmäßigerweise kann zusätzlich ein mechanischer Anschlagkontakt vorgesehen sein, der bei einem vollständigen Eindringen der dornartigen Vorrichtung die Antriebe der Seilspulen abrupt stoppt

### Zweite Baueinheit

### Lastaufnahmemittel

Das Lastaufnahmemittel besteht aus mehreren Baugruppen, der Hubvorrichtung, der Vorrichtung zum transversalen Bewegen sowie den Arretierungsmitteln.

### Hubvorrichtung

Zur Realisierung der erforderlichen Hubbewegung weist das Lastaufnahmemittel eine erfindungsgemäße Hubvorrichtung auf. Um die Last sowohl sicher auf dem Lastaufnahmemittel, einer etwaigen Regallagereinheit, als auch einem beliebigen Auslagerungsplatz zuverlässig und sicher plazieren zu können, ist es notwendig, die Last entsprechend anzuheben bzw. abzusenken.

Als technische Voraussetzung für ein zuverlässiges und sicheres Heben und Senken einer Last ist sicherzustellen, daß sowohl die Lastaufnahme, d.h. das Anheben der Last mit einer langsam ansteigenden Hubkraft erfolgt, sowie andererseits das Absenken der Last ebenfalls ruckfrei vonstatten geht, d.h. unter stetiger Abnahme der Hebekraft, so daß auch empfindliche Lasten, wie beispielsweise Paletten mit Gläsern oder empfindlichen elektronischen Geräten während des Absenkens oder Anheben nicht durch etwaige Schlagimpulse eine Beschädigung erfahren.

Bei der Bereitstellung einer Hubvorrichtung ist es aufgrund der beschränkten Raumkapazität auf dem Lastaufnahmemittel erforderlich, die Hubvorrichtung mit möglichst geringen Abmessungen zu realisieren sowie das Gewicht gering zu halten, um die Ladekapazität des Lastaufnahmemittels maximal auszuschöpfen.

Die Hubvorrichtung wird über eine Exzenterscheibe realisiert, die über eine Welle angetrieben wird.

Zweckmäßigerweise ist am Lastaufnahmemittel eine Lasttrageplattform ausgebildet, die an ihrer Unterseite auf Exzenterscheiben gelagert ist und eine seitliche Führung, vorzugsweise über entsprechende Zapfen, die in langen Löchern laufen oder durch Prismen, die in entsprechenden Winkelaussparungen gleiten, aufweisen.

Durch eine entsprechende Konturenausbildung der Exzenterscheiben ist es möglich, die jeweilige Absenk- und Hubgeschwindigkeit optimal anzupassen, da der Bewegungsablauf über die Formgebung der Exzenterscheibe zu beeinflussen ist

Zweckmäßigerweise sind mehrere derartige Exzenterscheiben unterhalb der Lasttrageplattform angeordnet, so daß die Last im wesentlichen gleichmäßig auf die entsprechenden Exzenterscheiben verteilt wird.

Bei einer anderen Ausführungsform der Hubvorrichtung ist es möglich, anstatt der Exzenterscheiben sogenannte Nockenscheiben bzw. Nockenwellen zu verwenden, die in ähnlicher Weise die Last anheben bzw. absenken.

Bei einer weiteren Ausführungsform der Hubvorrichtung kann der Hub bzw. das Absenken über eine entsprechende Hydraulik- oder Pneumatikvorrichtung erfolgen, wobei stets darauf zu achten ist, daß über entsprechende Ausgleichsmittel ein gleichmäßiges Heben und Senken vorgenommen wird.

Insbesondere bei hydraulisch und pneumatisch betriebenen Hubvorrichtungen besteht die Gefahr, daß Lasten, die einen exzentrischen Schwerpunkt aufweisen, die einzelnen Hubvorrichtungen unterschiedlich stark belasten und somit ein gleichmäßiges Heben bzw. Senken nicht möglich ist

Bei einer weiteren Ausführungsform der Hubvorrichtung kann über eine Zahnstange mit einem entsprechenden Ritzel bzw. einer Vielzahl von Zahnstangen und entsprechender Ritzel eine Hub- bzw. Senkbewegung ausgeführt Werden, wobei ebenfalls auf eine gleichmäßige Hub- bzw. Senkbewegung zu achten ist, um insbesondere ein Verkanten der Zahnstangen mit den Ritzeln zu vermeiden.

Bei einer weiteren Ausführungsform der Hubvorrichtung werden Spindeln, vorzugsweise vier Spindeln unterhalb der Lasttrageplattform angeordnet und die Rotation der einzelnen Spindeln durch ein Koppelmittel zueinander abgestimmt, so daß eine gleichmäßige Hub- bzw. Senkbewegung gewährleistet werden kann.

### Vorrichtung zum transversalen Bewegung

Um die auf dem Rastaufnahmemittel angeordnete Last in den entsprechenden Lagereinheiten einzulagern bzw. auszulagern, d.h. Last aus einem seitlich neben dem Lastaufnahmemittel befindlichen Ort auf das Lastaufnahmemittel zu transportieren, ist es notwendig eine Vorrichtung zur transversalen Bewegung im Lastaufnahmemittel zu integrieren.

Auf das Lastaufnahmemittel wird eine horizontal verschiebbare Bühne angeordnet, an der teleskopartig ineinander greifende Schubelemente so ausgestaltet sind, daß im Ruhezustand einerseits eine geringe Baugröße vorliegt, und im lastaufhehmendem Zustand andererseits beide Seiten des Lastaufnahmemittels gleichermaßen bedient werden können. Hierbei ist die statische Belastung der Schubelemente so in das Lastaufhahmemittel einzuleiten, daß auch bei einer maximal ausgefahrenen transversalen Vetschiebeeintichtung ein zuverlässiger und sicherer Betrieb gewährleistet werden kann.

Vorteilhafterweise ist die transversale Verschiebeinrichtung aus einer Vielzahl von ineinander verschiebbaren Einzelelementen aufgebaut, die untereinander jeweils über Antriebselemente operativ miteinander verbunden sind, wobei diese Antriebselemente zweckmäßigerweise Seile, Zugbänder oder andere forminstabile Antriebselemente sein können.

Bei einer anderen bevorzugten Ausführungsform der transversalen Verschiebeeinrichtung erfolgt der Antrieb der Einzelelemente über Zahnstangen und entsprechende Ritzeln, wobei die Zahnstangen als bewegliche Elemente vorgesehen sind und über entsprechende Ritzeln angetrieben werden.

Vorteilhafterweise ist mit der transversalen Verschiebeeinrichtung eine seitliche Distanz zu überbrücken, die mindestens der Breite des erfindungsgemäßen Lastaufnahmemittels entspricht, vorteilhafterweise sogar über dieses Maß hinausgeht

### Arretierungsmittel

Nach dem das erfindungsgemäße Lastaufnahmemittel einen Zielort in einer Lagerregaleinheit oder einer entsprechenden Aus-/Einlagerungseinheit erreicht hat wird es mit beiden unmittelbar benachbarten Lagerregaleinheiten so über ein entsprechendes mechanisches Arretierungsmittel verbunden, daß ein Aus- und/oder Einlagern von Lasten, insbesondere schweren Lasten möglich ist, wobei das Lastaufnahmemittel so mit den jeweiligen Lagerregaleinheiten zu verbinden ist, daß auch dynamische Kräfte, wenn auch ungewollt, beispielsweise ein Schwingen der Last aufgrund beweglicher Teile stets aufgenommen werden können, da das Arretierungsmittel das Lastaufnahmemittel während des Ein- und Auslagerns zuverlässig an die Regaleinheiten fixiert.

Die jeweiligen Arretierungsmittel bestehen aus zwei komplementären Baueinheiten, einer ersten Baueinheit, die an den Lagerregaleinheiten als Aufnahmemittel vorgesehen ist und einer zweiten Baueinheit, die am Lastaufnahmemittel angeordnet ist

Erfindungsgemäß wird das Lastaufnahmemittel mit mindestens zwei, vorzugsweise vier Arretiermitteln fixiert, wobei die Arretiermittel vorteilhafterweise in entsprechende klauenartig ausgebildete Aufnahmeeinheiten geschoben werden, und dort verharren. Zweckmäßigerweise erfolgt das Ausspreizen der Arretierungsmittel über geeignete Zahnstangen und Ritzel, die eine entsprechende Verriegelung vornehmen können. Bei der Ausgestaltung der Arretierungsmittel sind folgende technische Randbedingungen zu erfüllen:
- radiale Zentrierhilfe;
- axiale Zentrierhilfe;
- vertikaler Freiheitsgrad;
- vertikale Kraftaufnahme.

Erfindungsgemäß sind am Lastaufnahmemittel vier Arretierungsmittel vorgesehen, die jeweils maximal zueinander beabstandet und jeweils paarweise synchron verriegelbar ausgestaltet sind, um eine Verkantung des Lastaufnahmemittel zwischen den Lagerregaleinheiten zu vermeiden.

Eine bevorzugte Ausführungsform des Systems wird nachfolgend anhand von Zeichnungen näher erläutert. Es zeigen:
- Fig. 1: eine schematische Seitenansicht des Regalbediengeräts;
- Fig. 2: eine schematische Schnittdarstellung durch die Antriebseinheit der Verfahreinrichtung;

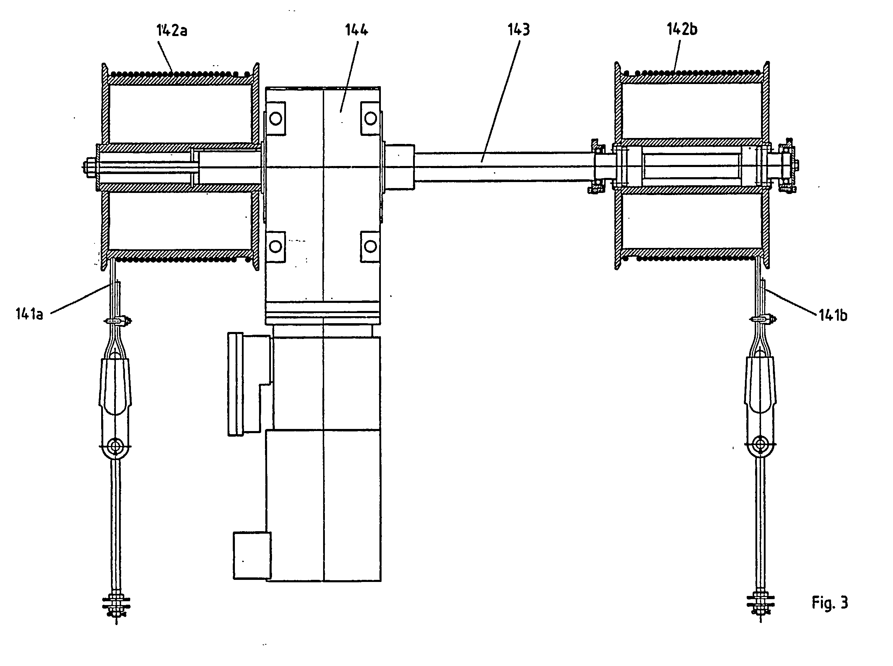

- Fig. 3: eine schematische Schnittdarstellung der Seilspulen auf der Verfahreinrichtung;
- Fig. 4: eine schematische Schnittdarstellung durch die Verfahreinrichtung mit Seilspulen und Antriebseinheit;
- Fig. 5: eine Schnittdarstellung durch die Seitenführung der Verfahreinrichtung;
- Fig. 6a: eine Schnittdarstellung der Hubvorrichtung;
- Fig. 6b: eine Draufsicht der Hubvorrichtung;
- Fig. 7: eine schematische Seitenansicht der Vorrichtung zum transversalen Bewegen;
- Fig. 8: eine Seitenansicht und Draufsicht der Antetierungsvorrichtung;
- Fig. 9: eine schematische Seitenansicht und Schnittdarstellung der Autlaufbremse.

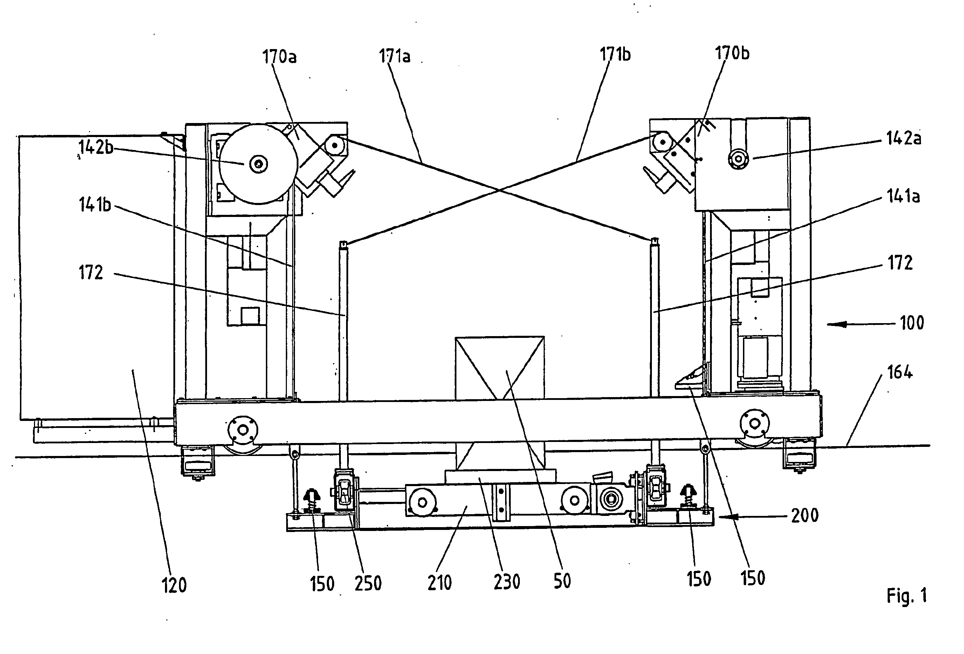

Das Regalbediengerät 1, gemäß Figur 1, zeigt die Verfahreinrichtung 100 mit dem darunter an Seilen 141a, 141b hängenden Lastaufnahmemittel 200. Die Verfahreinrichtung 100 mit schematisch dargestellter Steuereinheit 120 ist auf Schienen 164 beweglich gelagert, wobei die Schienen 164 in den jeweiligen Regaleinheiten (nicht dargestellt) auf unterschiedlichen Niveaus angeordnet sind.

Neben den Stahlseilen 141a bis 141d (141a und 141b sind dargestellt) besteht zwischen der Verfahreinheit 100 und dem Lastaufnahmemittel 200 über das Winkelmeßsystem 170a, 170b eine Verbindung, welche mittels forminstabiler Verbindungsmittel 171a, 171b erfolgt

Um eine gewisse lichte Höhe für den Transport der Last 50 zu erhalten, sind auf dem Lastaufnahmemittel 200 ortsfeste stabartige Vorrichtungen 172 angeordnet, an denen die forminstabilen Verbindungselemente 171a, 171b unlösbar befestigt sind.

In dem in Figur 1 dargestellten Zustand der Verfahreinrichtung 100 und des Lastaufnahmemittels 200 befindet sich das Lastaufnahmemittel 200 beabstandet unterhalb der Verfahreinrichtung 100, so daß die Auflaufbremse 150 keine Wirkung entfaltet. Werden die Seilspulen 142a, 142b betätigt und wickeln das Seil 141a und 141b weiter als im gezeigten Zustand auf, so wird die Auflaufbremse 150 aktiviert und bei Erreichen einer gewissen Distanz zwischen dem Lastaufnahmemittel 200 und der Verfahreinrichtung 100 den Antrieb der Seilspulen 142a,142b stoppen.

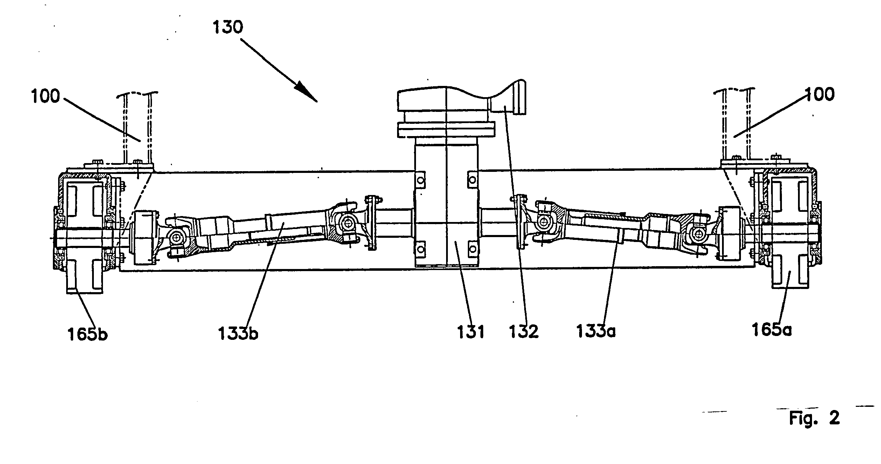

Figur 2 zeigt eine schematische Schnittdarstellung einer Antriebseinheit der Verfahreinrichtung 100. Der teilweise dargestellte elektrische Antrieb 132 ist an ein Getriebe 131 angeschlossen und das Antriebsmoment wird aus dem Getriebe 131 mittels Getriebegestänge 133a,133b auf die Antriebsräder 165a, 165b geleitet.

Vorteilhafterweise sind die Getriebegestänge 133a, 133b als Katdangestänge ausgebildet und können so gewisse Niveaudifferenzen zwischen den Schienen 164 und den darauf angeordneten Antriebsrädern 165a,165b ausgleichen.

Zum Heben und Senken des Lastaufnahmemittels 200 sind auf der Verfahreinrichtung 100 mindestens zwei Seilspulenpaare 142a, 142b (142c, 142d nicht gezeigt) angeordnet, auf denen vier Seile 141a, 141b, 141c und 141d aufgewickelt sind. Zweckmäßigerweise sind die Seile 141a, 141b, 141c und 141d unlösbar mit dem Lastaufnahmemittel 200 verbunden und die Seilspulen 142a, 142b über einen Antrieb 144 miteinander synchronisiert sowie die Seilspulen 142c, 142d ebenfalls über einen entsprechenden Antrieb (nicht dargestellt) miteinander synchronisiert

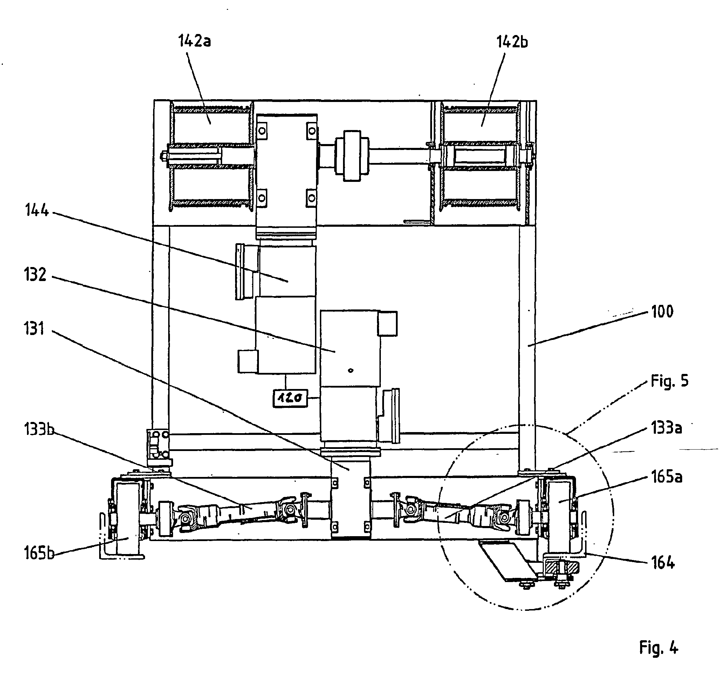

Die jeweiligen Seilspulenantriebe werden, wie auch der Antrieb der Verfahreinrichtung 132 über die Steuereinheit 120 gesteuert In der Schnittdarstellung gemäß Figur 4 ist die Anordnung der Antriebseinheit 130 mit den jeweiligen Komponenten (Antriebsaggregat 132, Getriebe 131, Getriebegestänge 133a, 133b) sowie die Seilspulen 142a, 142b und deren Antrieb 144 zusammen mit der Steuereinheit 120 dargestellt.

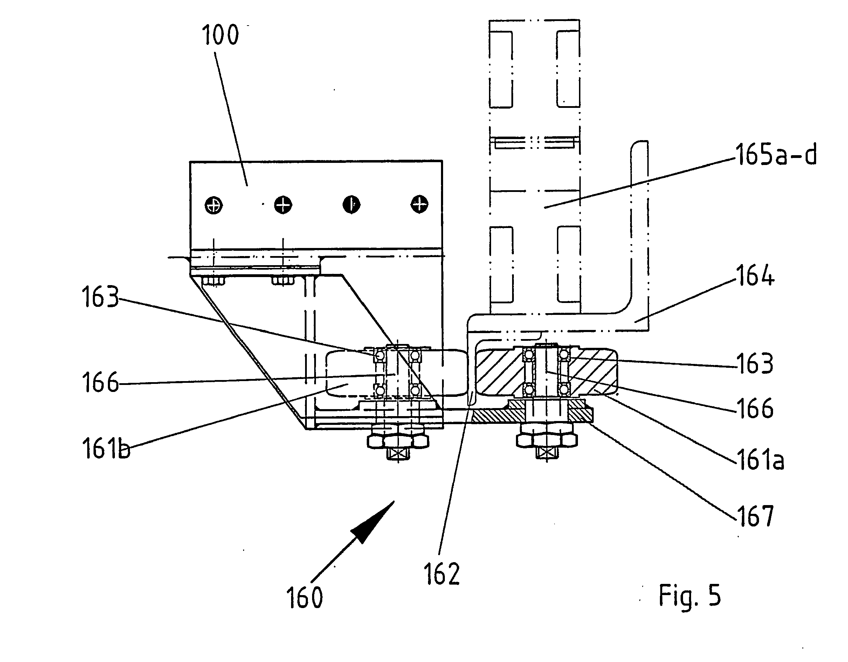

In der Detailansicht gemäß Figur 5 ist die seitliche Führung der Verfahreinheit 100 gezeigt, die im vorderen und hinteren Bereich der Verfahreinrichtung 100 angeordnet ist Zur seitlichen Führung weist die Schienenanordnung 164 eine vertikal nach unten führende Schienenleiste 162 auf, an der zwei Führungsräder 161a, 161b anliegen. Diese Führungsräder 161a, 161b sind über entsprechende Wälzlager 163 auf Bolzen 166 gelagert, die über ein Halterungsblech 167 mit der Verfahreinrichtung 100 verbunden sind. Durch die seitliche Führung der Verfahreinrichtung wird verhindert, daß die Antriebsräder 165a, 165b, 165c, 165d die Schienen 164 verlassen oder mit einzelnen Regaleinheiten kollidieren.

Die in dem Lastaufnahmemittel 200 integrierte Hubvorrichtung 210 weist vier Exzenterscheiben 211a, 211b, 211c und 211d auf, die paarweise jeweils auf Wellen 116, 117 angeordnet sind. Zum Antrieb der Wellen 116, 117 weisen diese jeweils Ritzel 213a, 213b auf, die mittels Antriebskette 214 miteinander verbunden sind und gemeinsam von dem Antriebsaggregat 212 über eine entsprechende Antriebskette 215 angetrieben werden.

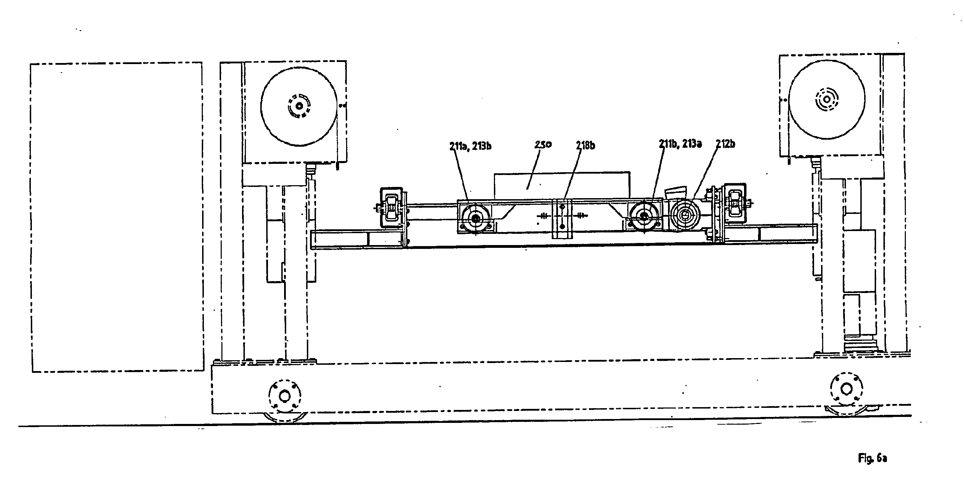

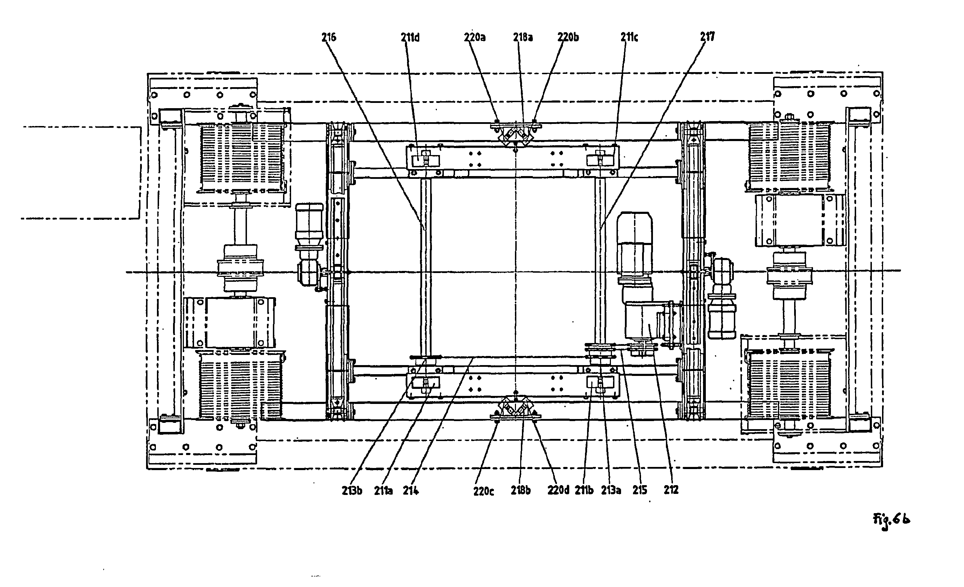

Wird das Antriebsaggregat 212 in Bewegung gesetzt, treibt diese die Antriebskette 215 an, so daß die Welle 17 direkt in Rotation versetzt wird und zeitgleich über die Antriebskette 214 die Welle 216 in Rotation versetzt Beide Rotationsbewegungen der Wellen 216 und 217 sind durch die in Figur 6 dargestellte Anordnung synchronisiert, so daß auch die Rotationsbewegung der Exzenterscheiben 211a, 211b, 211c, 211d synchron ablaufen.

Um eine seitliche Führung der Lasttrageplattform 219 zu gewährleisten sind an den beiden gegenüberliegenden Seiten der Lasttrageplattform 219 entsprechende Führungswinkel 218a, 218b vorgesehen. Zweckmäßigerweise läuft ein trapezförmig ausgebildetes Schienenelement, welches an der Lasttrageplattform 219 angeordnet ist, über gemäß Figur 6 dargestellte Führungsrollen 220a, 220b, 220c, 220d die am Rahmen des Lastaufnahmemittels 200 angeordnet sind, so daß lediglich ein Freiheitsgrad in vertikaler Richtung für die Bewegung der Lasttrageplattform 219 gegeben ist

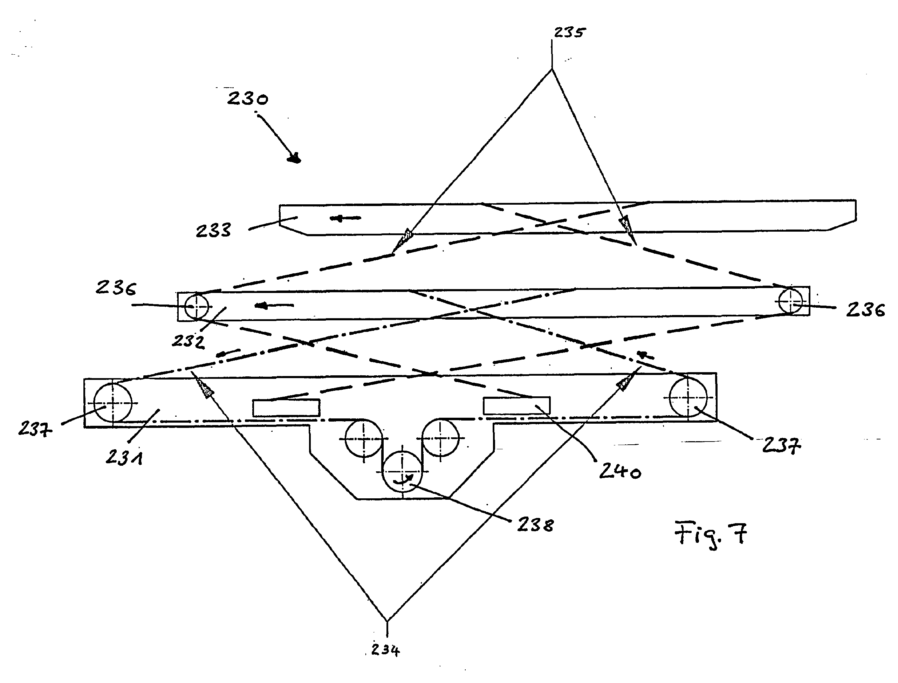

In der gemäß Figur 7 schematisch dargestellten Vorrichtung zum transversalen Bewegen 230 sind die Einzelelemente 231, 232 und 233 aus Anschaulichkeitsgründen auf verschiedenen Niveaus dargestellt und nicht - wie technisch realisiert - in einer Ebene.

Die drei Einzelelemente 231, 232, 233 sind jeweils über forminstabile Verbindungselemente 234 und 235 miteinander verbunden. Die gemäß Figur 7 dargestellte unterste Ebene, bezeichnet als Einzelelement 231, ist auf der Lasttrageplattform 219 angeordnet und mit dieser fest verbunden.

Das Einzelelement 232 liegt innerhalb des Einzelelements 231 und ist mit diesem über das Verbindungselement 234 verbunden. Das Einzelelement 233 liegt innerhalb des Einzelelements 232 und ist mit diesem über das Verbindungselement 235 verbunden.

Das Verbindungselement 235 besteht aus zwei Ästen, die jeweils an dem Einzelelement 231 und dem Einzelelement 233 befestigt ist und wird über Umlenkelemente 236, welche an dem Einzelelement 232 angeordnet sind umgelenkt Das als Antriebselement ausgebildete Verbindungselement 234 besteht aus nur einem Ast und verbindet die Einzelelemente 232 und 231 miteinander, wobei auch das Verbindungselement 235 über entsprechende Umlenkelemente 237 umgelenkt wird, welche an den jeweiligen Ende des Einzelelements 231 angeordnet sind.

Bei Rotation des Antriebselements 238 in angegebener Pfeilrichtung wird das Verbindungselement 234 ebenfalls in Pfeilrichtung über das Umlenkelement 237 umgelenkt und übt eine Kraft auf das Einzelelement 232 aus, so daß dieses ebenfalls eine Bewegung in Pfeilrichtung aufnimmt

Durch die Bewegung des Einzelelements 232 in Pfeilrichtung wird ebenfalls das Verbindungselement 235 über die Umlenkelemente 236 gefördert, so daß das Einzelelement 233 ebenfalls eine Bewegung in Pfeilrichtung aufnimmt Sobald der Antrieb 238 stoppt wird auch die jeweilige Transversalbewegung der Einzelelemente 232 und 233 gestoppt und bei der Drehrichtungsumkehr des Antriebs 238 eine entgegenläufige Bewegung der Einzelelemente 232, 233 aufgenommen. Zweckmäßigerweise sind die Verbindungselemente 234, 235 als Kette ausgebildet

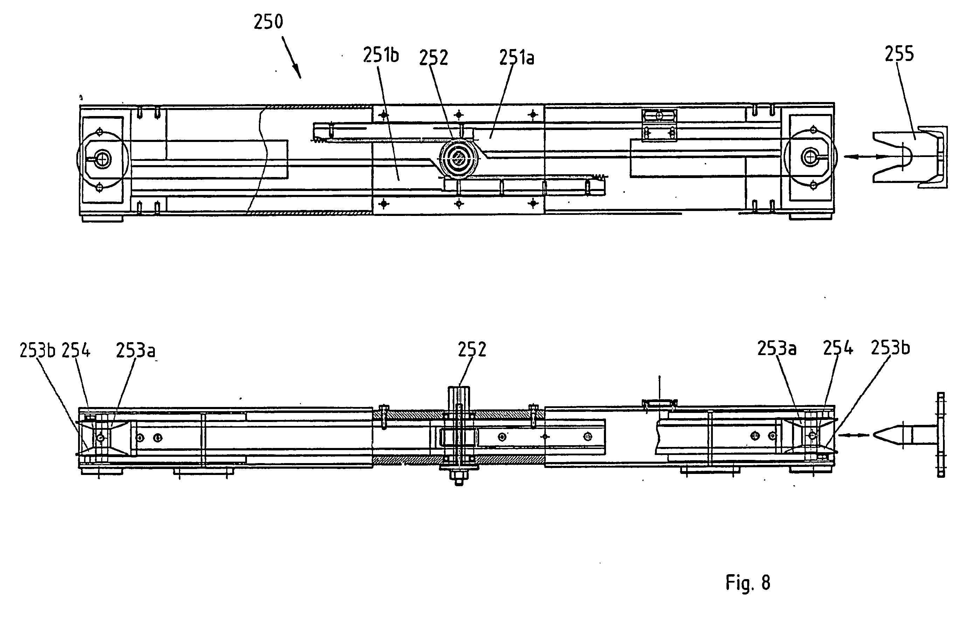

Die Arretierungsvorrichtung 250 gemäß Figur 8 zeigt zwei holmartig ausgebildete Elemente 251 a, 251b, die an ihrem einen Ende jeweils ein Zahnstangenprofil aufweisen und an ihrem anderen Ende Arretierungsmittel 253a, 253b, 254 aufweisen, die in entsprechende Arretierungsaufnahmen 255, die an den Regaleinheiten 2 angeordnet sind, eingreifen können.

Gemäß Figur 8 sind die Arretierungsmittel aus jeweils zwei pyramiden-stumpfförmigen Körpern 253a, 253b ausgebildet, deren verjüngte Fläche über einen zylinderförmigen Körper 254 miteinander verbunden sind. Die Mantelflächen der pyramiden-stumpfförmigen Körper 253a, 253b dienen als Zentrierhilfe für die entsprechende Arretierungsaufnahme 255. Bei Betätigung des Antriebs 252 führen die holmartigen Elemente 251a, 251b eine entgegengesetzte . Bewegung aus und spreizen die Arretierungsmittel 253a, 253b, 254 in die Anetierungsaufnahmen 255, so daß das Lastaufnahmemittel 200 formschlüssig mit den so benachbarten Regaleinheiten 2 (nicht gezeigt) verbunden ist

Um den Zeitpunkt der Arretierung erfassen zu können, ist der Antrieb 252 beispielsweise über eine entsprechende Momentenmeßvorrichtung ausgerüstet bzw. Sensoren melden einen entsprechenden Berührungskontakt zwischen Arretierungsaufnahme und zylinderförmigen Körper, so daß der Antrieb 252 ein entsprechendes Signal erhält und ein weiteres Ausspreizen der Holme 251a und 251b stoppt

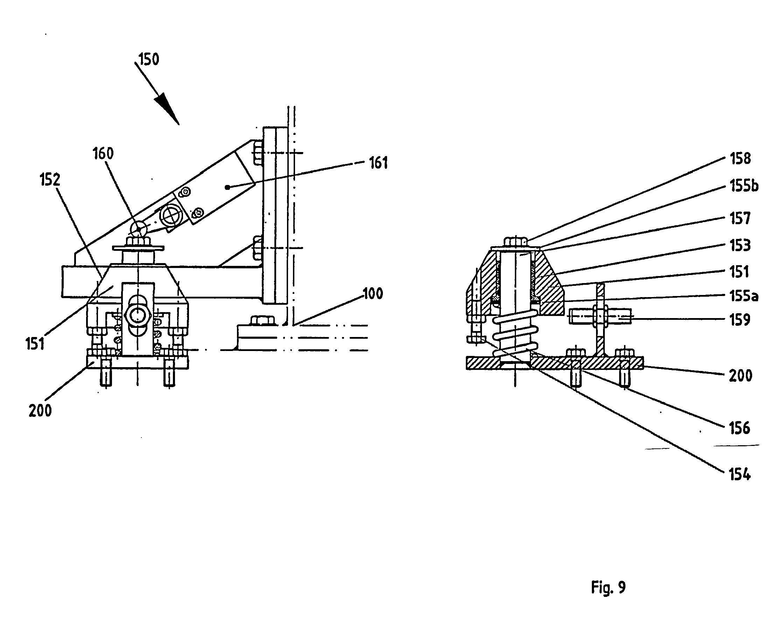

Figur 9 zeigt die Auflaufbremse 150, die eine Kollision des Lastaufnahmemittels 200 mit der Verfahreinrichtung 100 verhindert Hierzu ist an geeigneter Stelle auf dem Lastaufnahmemittel-200 ein Bolzen 157 angeordnet, der vorzugsweise auf dem Lastaufnahmemittel 200 angeschweißt ist

Auf dem Bolzen 157 ist ein kegelstumpfartiger Körper 151 gleitend angeordnet, wobei eine Abstützung des kegelstumpfförmigen Körpers 151 über eine Schraubenfeder 156 erfolgt, und die Beweglichkeit des kegelstumpfförmigen Körpers 151 über eine Gleitbuchse 153 und einer unmittelbar daran angeordneten Scheibe 155a sichergestellt wird.

Um ein Lösen des kegelstumpfförmigen Körpers 151 vom Bolzen 157 zu verhindern, ist der kegelstumpfförmige Körper 151 mit einer Scheibe 155b und einer entsprechenden Mutter 158 gesichert Benachbart zum kegelstumpfförmigen Körper 151 ist ein Sensor 159 angeordnet, der so ausgerichtet und ausgebildet ist, daß eine Vertikalbewegung des kegelstumpfförmigen Körpers 151 ein entsprechendes Signal auslöst, welches in der Steuereinheit verarbeitet wird.

An der Verfahreinrichtung 100 ist eine kegelstumpfförmige Aussparung 152 ausgebildet, deren Kontur das Komplementär zum kegelstumpfförmigen Körper 151 ist Bei einer entsprechenden Vertikalbewegung des Lastaufnahmemittels 200 taucht der kegelstumpfförmige Körper 151 bei Erreichen einer gewissen Distanz zwischen Lastaufnahmemittel 200 und Verfahreinrichtung 100 in die kegelstumpfförmige Aussparung 152 und schmiegt sich an diese formschlüssig an.

Durch die Gleitlagerung des kegelstumpfförmigen Körpers 151 auf dem Bolzen 157 entsteht beim Weiterführen der Vertikalbewegung des Lastaufnahmemittels 200 eine Schiebebewegung auf dem Bolzen 157, entgegen der Federkraft der Schraubenfeder 156, so daß der kegelstumpfförmige Körper 151 eine Relativbewegung gegenüber dem Sensor 159 ausübt Das durch diese Bewegung des kegelstumpfförmigen Körpers erzeugte Signal wird in der Steuereinheit 120 verarbeitet und führt zu einem Stoppen der Seilspulenantriebe 144.

Um bei einem Ausfall des Sensors 159 dennoch ein zuverlässiges Stoppen der Seilspulenantriebe 144 zu bewirken ist ferner ein Schalterelement 161 vorgesehen, welches so an der Verfahreinrichtung 100 angeordnet ist, daß bei einer weiteren Vertikalbewegung des Lastaufnahmemittels 100 die am Bolzen 157 befindliche Mutter 158 auf einen Schalterarm 160 aufläuft und die elektrische Versorgung der Spulenantriebe abrupt unterbricht

## Patentansprüche

1. Lastaufnahmemittel (200) zur Verwendung in einem System zum Bedienen von Lagereinheiten, insbesondere von Hochregallagern,
- mit Mitteln zum mechanischen Verbinden mit einer Regaleinheit (2),
- einer Hubvorrichtung (210)
- und einer darauf angeordneten Vorrichtung zum transversalen Bewegen von Lasten, **dadurch gekennzeichnet, daß**
- das Mittel zum Verbinden mit einer Regaleinheit (2) einen elektrischen Antrieb mit einem Ritzel aufweist, welches Zahnstangen (251 a, 251 b) antreibt und die Zahnstangen (251a, 251 b) so angeordnet und ausgebildet sind, daß sie bei Rotation des Ritzels seitlich aus dem Lastaufnahmemittel (200) ausfahren und die Zahnstangen (251 a, 251 b) jeweils an ihren über das Lastaufnahmemittel (200) herausstehenden Enden Mittel aufweisen, die in entsprechende Aufnahmevorrichtungen (255) an der Regaleinheit (2) eingreifen, so daß das Lastaufnahmemittel formschlüssig mit der Regaleinheit (2) verbunden ist, wobei die Mittel am Ende einer jeden Zahnstange (251 a, 251 b) im wesentlichen aus zwei kegelstumpfförmigen Körpern (253a, 253b) bestehen, deren jüngere Abschlußflächen über einen zylinderförmigen Körper (254) miteinander verbunden sind, und
- daß die Hubvorrichtung (210) aus einer Lasttrageplattform zur Aufnahme der Lagereinheiten besteht, wobei die Lasttrageplattform an ihrer Unterseite mit Mittel in Wirkverbindung steht, die so ausgebildet sind, die Lasttrageplattform unter Beibehaltung ihrer im wesentlichen horizontalen Ausrichtung anzuheben bzw. abzusenken, wobei die an der Unterseite der Lasttrageplattform befindlichen Mitteln aus Rotationsmittel bestehen, die so an der Unterseite der Lasttrageplattform angeordnet sind, daß eine gleichmäßige Lastverteilung stattfindet.

## Claims

1. Load receiving means (200) for use in a system for operating storage units, in particular high rack storage areas, comprising
- means for the mechanical connection with a rack unit (2),
- lifting means (210),
- and a device arranged thereon for the transversal movement of loads, **characterized in that**
- said means for connection with a rack unit (2) comprises an electrical drive with a pinion which drives gear rods (251 a, 251 b), and that said gear rods (251 a, 251 b) are arranged and designed such that they extend laterally from said load receiving means on rotation of the pinion, and that said gear rods (251 a, 251 b) each comprise, at their ends projecting beyond said load receiving means (200), means that engage in corresponding receiving devices (255) at the rack unit (2), so that said load receiving means is connected with positive locking with said rack unit (2), wherein said means at the end of each gear rod (251 a, 251 b) substantially consist of two bodies (253a, 253b) of the shape of a truncated cone, the tapered end faces of which are connected with each other via a cylinder-shaped body (254), and that
- said lifting device (210) consists of a load bearing platform for receiving the storage units, wherein the load bearing platform at its bottom is in operative connection with means that are designed to lift or to lower the load bearing platform by maintaining its substantially horizontal orientation, wherein the means positioned at the bottom of the load receiving platform consist of rotation means that are arranged at the bottom of the load bearing platform such that a uniform load distribution takes place.

## Revendications

1. Moyen de suspension de charge (200) pour utilisation dans un système destiné à manipuler des unités de stockage, en particulier des stocks à rayonnages élevés, comprenant
- des moyens pour la liaison mécanique avec une unité de rayonnage (2),
- un dispositif de levage (210) et
- un dispositif disposé dessus pour le déplacement transversal des charges, **caractérisé en ce que**
- le moyen pour la liaison avec une unité de rayonnage (2) présente un entraînement électrique avec un pignon, lequel entraîne des crémaillères (251a, 251b), et les crémaillères (251a, 251b) sont disposées et agencées de telle sorte que, lors de la rotation du pignon, elles sortent latéralement du moyen de suspension de charge (200), et les crémaillères (251a, 251b) présentent chacune sur leurs extrémités dépassant du moyen de suspension de charge (200) des moyens qui s'engagent dans des dispositifs de suspension (255) appropriés sur l'unité de rayonnage (2), de sorte que le moyen de suspension de charge est relié par complémentarité de formes à l'unité de rayonnage (2), les moyens sur l'extrémité de chaque crémaillère (251a, 251b) étant constitués principalement de deux corps (253a, 253b) en forme tronconique, dont les surfaces terminales effilées sont reliées entre elles au moyen d'un corps (254) en forme cylindrique, et
- **en ce que** le dispositif de levage (210) est constitué d'une plate-forme porteuse de charge pour le logement des unités de stockage, la plate-forme porteuse de charge étant en liaison active sur son côté inférieur avec des moyens qui sont agencés pour soulever ou abaisser la plate-forme porteuse de charge en conservant son orientation sensiblement horizontale, les moyens se trouvant sur le côté inférieur de la plate-forme porteuse de charge étant constitués de moyens de rotation qui sont disposés sur le côté inférieur de la plate-forme porteuse de charge de telle sorte qu'on a une répartition de charge uniforme.
